Europäisches Patentamt

European Patent Office

Office européen des brevets

(19)

(11) Publication number: **0 128 881**
A2

(12) # EUROPEAN PATENT APPLICATION

(21) Application number: **84850088.0**

(22) Date of filing: **21.03.84**

(51) Int. Cl.³: **G 01 D 5/16**

(30) Priority: **22.03.83 SE 8301563**

(43) Date of publication of application: **19.12.84**
**Bulletin 84/51**

(84) Designated Contracting States: **AT BE CH DE FR GB IT LI NL**

(71) Applicant: **HARA AB, Odenskogsvägen 35, S-83148 Östersund (SE)**

(72) Inventor: **Fjällgren, Christer, Rodervägen 33, S-89033 Bonässund (SE)**

(74) Representative: **Grennberg, Erik Bertil et al, H ALBIHNS PATENTBYRA AB Box 7664, S-103 94 Stockholm (SE)**

(54) **Potentiometer device for determining the position of hydraulic pistons and the like.**

(57) The invention relates to a potentiometer device for a hydraulic cylinder (11) for example. On the inside of a tube (10) there are, evenly distributed about the circumference and parallel to its axis, two conductors and a linear resistance in the form of strips. This tube (10) is mounted inside the piston rod (14) and is open at the piston (13). The conductors are joined to opposite ends of the linear resistance, and the tube (10) is movable together with the piston (13). A stationary contact holder (15) is attached to a tube (16) fastened in the end of the cylinder opposite to where the piston rod emerges. Said contact holder has three leads (4, 5, 6) drawn through the hydraulic cylinder (11) and being attached to individual slide contacts in the contact holder (15) making contact with the respective conductors and the linear resistance.

EP 0 128 881 A2

# POTENTIOMETER DEVICE FOR DETERMINING THE POSITION OF HYDRAULIC PISTONS AND THE LIKE

The invention relates to a potentiometer device as according to the preamble to the attached claim 1. Although it is primarily intended for hydraulic pistons, it is clear that the invention can also be applied to pneumatic cylinders or other similar mechanisms.

Potentiometer devices of this type are previously known by US Patent Specification 3 726 191. The installation of slide potentiometers in hydraulic cylinders is also known by Norwegian Lay-open Print 119 258.

These known designs utilize wire-wound resistances, which are mounted on rods, fixed at one end of the cylinder and inserted to varying degrees through a hole in the piston and its piston rod, of which the latter penetrates through the other opposite end of the cylinder.

Electrically, the typical potentionmeter has a resistance with two fixed end terminals to which a voltage is connected, and the voltage drop is distributed along the resistance. A movable slide contact can be moved in contact with the resistance and the potential which is registered by the slide contact constitutes an electrical measure of the position of the contact. It has thus been considered natural to allow the "fixed" terminals and thus the resistance be stationary and allow the movable contact to move with the hydraulic piston. In order to connect the movable contact to a terminal outside the cylinder, according to the US Patent Specification, the movable contact was connected to another movable contact, which was in turn in contact with a stationary conductor parallel to the linear resistance and coupled to its external terminal. In the Norwegian Patent Specification, however, the connection is made through direct contact with the piston, and possibly with an additional contact between the piston and the cylinder, whereby the movable contact of the potentiometer will actually be essentially grounded, and this can present problems and complications. The design according to the Norwegian lay-open print has, however, the advantage that the piston and the piston rod are not limited as to rotation in the cylinder, as is the case with the device described in the US patent specification. .

One object of the invention is to achieve a potentiometer device of the above described type which is less expensive and simpler than previously known devices and which is suited to mass production. Preferably it should also be able to be standardized and easily adapted to different models of hydraulic cylinders.

The invention is based on the insight that it is easier to achieve the above mentioned advantages if the design is, so to speak, completely reversed, making the potentiometer resistance movable together with the hydraulic piston, while the "movable potentiometer contact" is made stationary. The above mentioned advantages and other advantages and properties can then be achieved through the features described in detail in the characterizing clause of claim 1.

Special note should be taken of the fact that the lengths of the supply wires are compensated for by virtue of the fact that the two current contacts of the potentiometer are achieved by means of movable contacts and conductors which lead in opposite directions towards the ends of the potentiometer. The total length of the lead in wires will thus be constant and equal to the effective length of the potentiometer, and thus there will be a one-to-one correspondence between the output voltage and the contact position.

In accordance with a preferred embodiment the potentiometer is manufactured on an elongated carrier, e.g. of plastic, which is provided with a strip of resistance material and two conductor strips parallel therewith. The carrier is then rolled up laterally and welded into a tube, and mounted in a tubular piston rod.

It is advisable to make the three strips rather wide, since the three "movable" contacts can then be rotated slightly in relation to the tube, meaning that the piston and piston rod can be rotated for instance $\pm 10^{\circ}$ (or more if desired) in relation to the cylinder. For usual uses of hydraulic cylinders, e.g. in mobile machines, this is entirely sufficient, and further rotation of the piston in the cylinder is usually impossible due to structural obstacles.

It is also advantageous to arrange the connection between conductor and resistance at the ends by slipping into or onto the ends special end sleeves provided with conducting portions over only part of the circumference sufficient to establish contact between two of the three strips. This makes it possible to cut the potentiometer to any length to be mounted in a cylinder of virtually any type of length.

The invention will now be described in more detail with reference to the figures, which show a non-limited example.

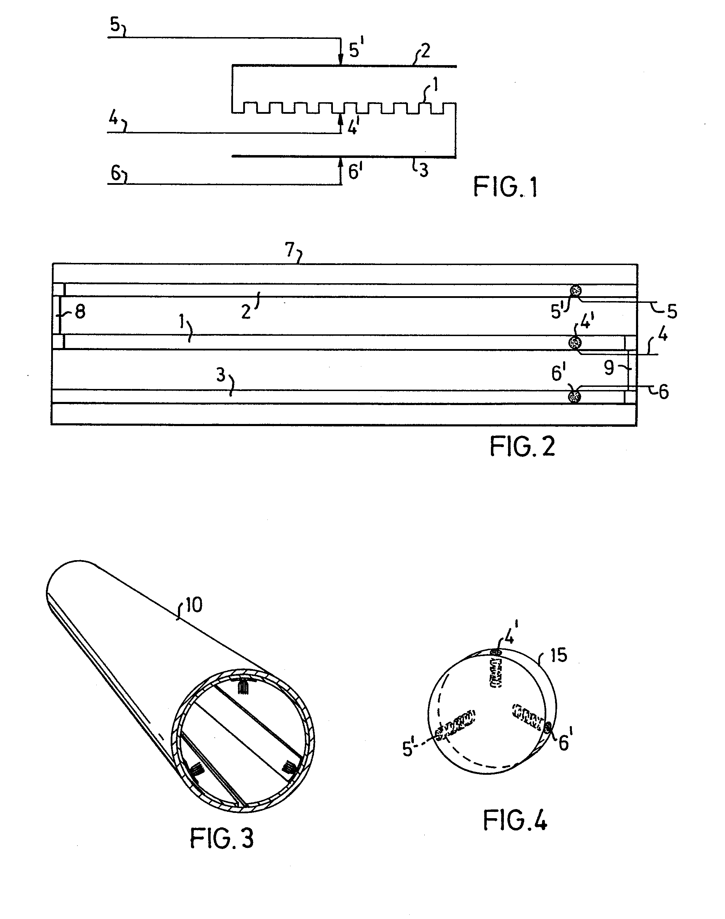

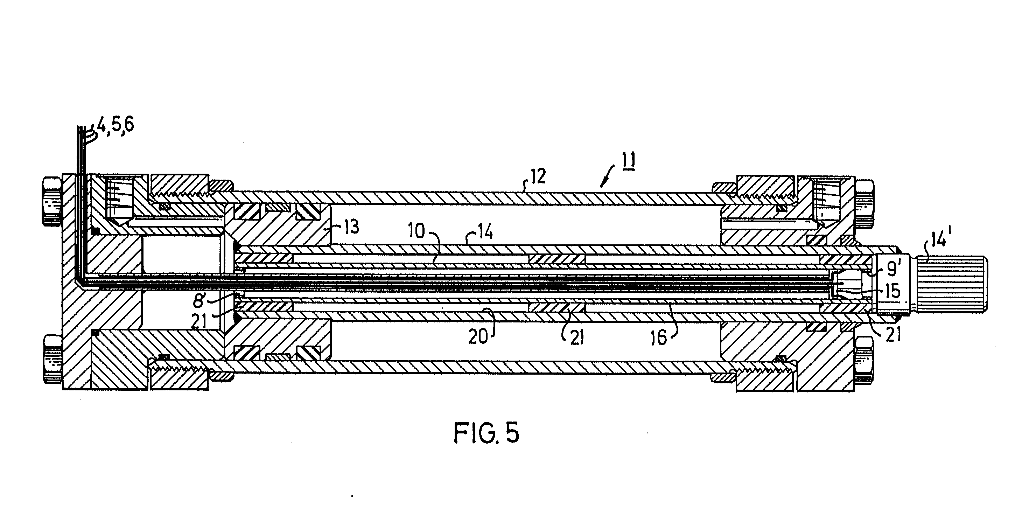

Fig 1 shows an electrical circuit diagram, illustrating the principle of the device. Fig 2 shows a rolled-out conductor carrier. Fig 3 shows schematically a section through a potentiometer at the movable contacts. Fig 4 shows schematically a contact brush block. Fig 5 shows a practical embodiment of the invention, in longitudinal section.

The schematic diagram in Fig 1 shows the operating principle of the potentiometer according to the invention. On a carrier (more specifically, inside a tube) there are two conductors 2 and 3 and a linear resistance 1. At one end, the conductor 2 is joined to one end of the resistance 1, which is connected at the other end to the conductor 3. These components 1, 2, 3 are joined and arranged to be longitudinally displaceable. In a stationary brush holder, there are three contacts 5', 6', 7', which make contact with the conductors and the resistance at a location determined by the displacement. The contacts 4', 5', 6' are connected to the leads 4, 5, 6. For use, a voltage is applied between the leads 5 and 6. This results in a current which in the figure runs through the contact 5', the lefthand portion of the conductor 2, the resistance 1 from left to right and then through the righthand portion of the conductor 3 and the contact 6' and out through the lead 6. The voltage at contact 4' which is registered via the lead 4, provides a measure of the contact position. Moving the contacts relative to the conductors and the resistance results in an increase in the resistance contributed by the conductor 2 and a decrease in the resistance contributed by the conductor 3, and therefore the potentials at both end points of the resistance 1 approach the potential of the conductor 6, and this change is in the same direction as the change in the potential of the contact 4'. Thus, there can in principle be no ambiguity in the correlation between position and potentiometer voltage, and if the tiny resistance in the conductors 2 and 3 is distributed linearly, linearity will also be maintained.

Fig 2 shows a rolled-out potentiometer. On a carrier 7 of non-conducting material, three strips 1, 2, 3 are laid out, strip 1 having a resistance of for instance 5 kΩ per meter, while strips 2 and 3 have low resistance, for instance 0.1 Ω per meter. The connections 8 and 9 are shown schematically, as are the contacts 4', 5', 6'. In Fig 3, the carrier 7 has been rolled up and inserted in a metal tube 10. Fig 4 shows an example of a brush block with three brushes 4', 5', 6' to be mounted inside the tube 10 in Fig 3.

Fig 5 shows a hydraulic cylinder 11 in longitudinal section. As in ordinary hydraulic cylinders, this one also has openings for hydraulic fluid, seals, scrapers etc., which, however, do not constitute a part of the invention and are therefore not described in more detail here. It is sufficient to note that in a cylinder 12 there is a movable piston 13 with a piston rod 14, which passes through one end of the cylinder and has a working end 14', which is normally fixed to something to be operated by means of the piston.

Of particular importance is the fact that the piston 13 and the piston rod 14 have a cylindrical hole 20, which is open at the end of the piston 13 facing away from the piston rod 14 and, when the piston is in the retracted position shown, extends up to the end of the hydraulic cylinder where the piston rod 14 emerges. Into this hole 20 a tube 10 is inserted which can be made as described above. The tube 10 is force-fitted by means of tubular sleeves 21 in the hole 20.

The connections 8 and 9 (see Fig 2) are achieved with plastic rings 8' and 9' at the ends of the tube 10, said plastic rings having electrically conducting coatings covering for example half of the circumference.

A tube 16 is mounted inside the tube 10 and contains the three leads 4, 5, 6. The tube 16 is fixed at the cylinder end wall opposite to where the piston rod 14 emerges. Otherwise, the tube 16 is freely suspended in the brush holder 15, which can be of the type shown in Fig 4, with brushes 4', 5' 6' connected to the leads 4, 5, 6. It can be seen that if the piston 13 in Fig 5 moves to the right and pushes out the piston rod 14, the stationary "movable" brush holder 15 will slide against the inside of the tube 10, with the brushes making contact as described in connection with Fig 1.

# 0128881

CLAIMS

1. Potentiometer device for determining the position of hydraulic pistons and the like, there being arranged in a cylinder a movable piston, provided with a piston rod, which exits through an endwall of the cylinder; a linear resistance extending through the cylinder, through a hole in the piston and through a hole running axially inside the piston rod; and a movable contact being arranged to make contact with the linear resistance at a point dependent on the position of the piston in the cylinder; the ends of the resistance together with the movable contact being coupled to individual terminals outside the cylinder, characterized in that the linear resistance (1) is in the form of a strip and is securely mounted on an inner-cylindrical surface disposed in the axial hole (20) in the piston rod and thus being movable together with the piston; that two strip conductors (2,3) parallel to each other and to the linear resistance are securely mounted in the axial hole of the piston rod; that the conductors are electrically connected at one end with individual ends of the linear resistance (via 8,9) and that said contact (4') which is movable relative to the linear resistance, together with two additional contacts (5'6'), in contact with individual leads, are arranged together in a head (15) which is stationary relative to the movement of the piston, and that these contacts are coupled to said individual terminals (4,5,6) outside the cylinder.

2. Potentiometer device according to Claim 1, characterized in that the resistance and the two conductors are laid on a planar elongated carrier (7) which is rolled laterally into a cylinder, in which the resistance (1) and the two conductors (2,3) are parallel to the generatrix of the cylinder, and this cylinder is mounted in the piston rod made of a tube (14).

3. Potentiometer device according to Claim 2, characterized in that the resistance and the two conductors each take up at least 20° of the circumference, whereby the piston can be rotated, while still preserving contact, through an angle of at least ± 10°.

4. Potentiometer device according to any one of the preceding claims, characterized in that the connection of the conductors to the linear resistance is effected by end sleeves (8',9'), which have cylindrical portions which are in contact with the inner cylindrical surface and have conducting portions (8,9) covering only a portion of the circumference, so that they each make contact between one of the conductors (2,3) and the resistance (1) without making contact with more than one of the conductors.

FIG.1

FIG.2

FIG.3

FIG.4

FIG. 5

4,5,6

12

11

13 10 14

9'
15
14'

8'
21
20 21 16 21

2/2

0128881